# EUROPEAN PATENT APPLICATION

(11) **EP 0 543 566 A2**
(43) Date of publication of application: **26.05.1993**
(21) Application number: 92310335.2
(22) Date of filing: 12.11.1992
(51) Int. Cl.: G06F 3/033

(54) **Touch screen**

(30) Priority: 22.11.1991 US 796287
(71) Applicant: International Business Machines Corporation, Armonk, N.Y. 10504 (US)
(72) Inventor: Conner, Michael Haden, Austin, Texas 78759 (US)
(74) Representative: Burt, Roger James, Dr.

(57) **Abstract**

What is described is a method of apparatus for display processing that provides dynamic capture and distribution of gestures and associated spoken phrases to a cooperative work effort via a low cost communication medium. A computer detects, displays and communicates gestures to a plurality of users. The gestures are displayed as a variety of geometric figures. The computer detects each contact point as an entry to the computer display (35) via a touch screen (39). Any spoken phrases associated with the hand gestures are also multiplexed with the graphic display information and communicated to other users participating via a multiplexed data and voice network. The network conveys display information to the networked displays and voice information to the networked phones associated with the collaborators.

## Description

This invention generally relates to touch screens and more particularly to providing an interactive apparatus for a method of capturing and presenting descriptive gestures from one computer to another.

Historically, keyboards were used to interact with display devices. Developing requirements of particular users lead to a number of alternative methods of interacting with display devices. Included in the alternatives were mice, light pens, tablets, joysticks and touch screens. The development of touch screens provided an alternative that did not require additional hardware, other than the display, for the user to interact with.

Techniques for improving touch screen technology have been developed. For example, IBM Technical Disclosure Bulletin, N10A, March 1991, pp. 223-227, Algorithm for Decreasing the Error Rate of Data Entered on a Touch-Sensitive Terminal, discloses the use of target areas on a display for a user to aim at when pressing the display to actuate an action. When pressed, the area on the display changes to reverse-video to positively indicate that a press of a particular area has been detected. The article also suggested that an audible alarm and changing the size of the area would assist a user in positively identifying the area selected.

**Minneman, Scott L., and Tang, John C,** A VIDEO INTERFACE FOR COLLABORATIVE DRAWING, published by XEROX PARC in 1990, describes a shared, prototype drawing tool. The tool provides a virtual sketchbook that is shared by two or more collaborators to see each others drawings as they are created. The tool uses a pair of video cameras, a pair of display devices and a microphone headset for each of the collaborators. The four displays and other video equipment allow each of the participants to observe the other participant's drawings, hand gestures and other information in realtime. One outcome of this research work was the importance of conveying user hand gestures to the other participants. The effectiveness of gestures of this type depends on maintaining a relationship between the hands and the sketches on the screen.

In accordance with the present invention, there is now provided apparatus for creating a figure on a touch screen display, comprising: means for detecting touch contact points on the touch screen display; means for calculating dimensions of the figure based on the location of the contact points on the touch screen display; and means for displaying the figure at the location of the contact points on the touch screen display.

The present invention thus advantageously provides a system and method for exploiting the capabilities of computer attached touch screens to accurately and conveniently portray hand gestures associated with computer displayed information in real time at one or more locations to one or more users.

In a preferred embodiment of the present invention, there is provides an algorithm in the memory of a processor and a display. Under the control of the algorithm, the processor detects each contact point as an entry to the computer display via, for example, a touch screen. Based on a particular mode of operation and the number of points that are entered, various geometric figures are used to represent the user gesture on the display. Any spoken phrases associated with the gestures are also multiplexed with the graphic display information and communicated to other users participating via a multiplexed data and voice data network. The data network conveys display information to the networked displays and voice information to the networked phones associated with the collaborators. All of the collaborators exchange spoken and graphical information on a real time basis.

A preferred embodiment of the present invention will now be described with reference to the accompanying drawings in which:
Figure **1** is a block diagram of a personal computer system in accordance with the subject invention;
Figure **2** is a schematic diagram of a data processing system comprising three workstations and a file server;
Figure **3** schematically depicts a set of data hand gestures depicted graphically on a display in accordance with the subject invention;
Figure **4** schematically depicts a set of data hand gestures depicted graphically on a display in accordance with the subject invention; and
Figure **5** is a flow diagram of the detailed logic in accordance with the subject invention.

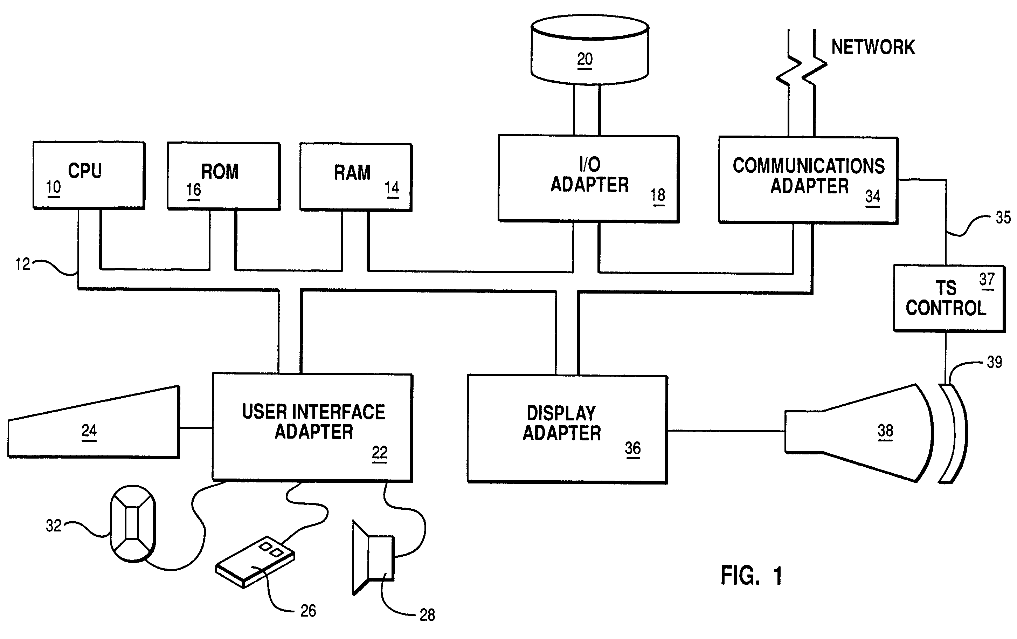

Refer now to Figure **1**, which illustrates a typical hardware configuration of a workstation with a central processing unit **10**, such as a conventional microprocessor, and a number of other units interconnected via a system bus **12.** The workstation shown in Figure **1** includes a random access memory (RAM) **14,** read only memory (ROM) **16**, an I/O adapter **18** for connecting peripheral devices such as disk units **20** to the bus, a user interface adapter **22** for connecting a keyboard **24**, a mouse **26,** a loudspeaker **28,** a microphone **32,** and/or other user interface devices to the bus, a communications adapter **34** for connecting the workstation to a data processing network or other communication device and a display adapter **36** for connecting the bus to a display device **38.**

The invention is preferably practiced in the context of a touch screen display such as the Model 3002 Serial Controller and Touch Screen marketed by Interaction Systems, Inc. described in the Operator's Manual (1986) and incorporated by reference in its entirety herein. The touch screen is preferably mounted on a conventional microprocessor display, such as the display shown in Figure **1** at **38**. The faceplate **39** is mounted on the display **38** and connected via a controller **37**, ascii cable **35** and an asynchronous communication adapter **34** to the workstation.

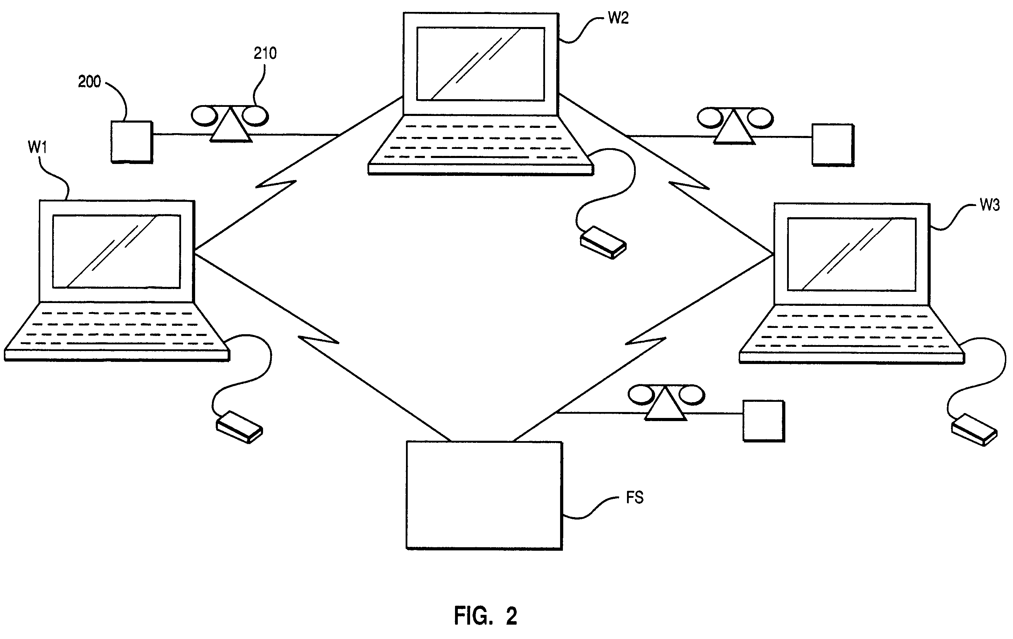

Although Figure **1** shows a typical 'intelligent' workstation, a workstation may in fact be a dumb terminal with only a limited processing capability, under the control of a host processor. This will be made clear in connection with Figure **2**.

Figure **2** illustrates a data processing system comprising a number of workstations (here, three workstations **W1**, **W2** and **W3**) interconnected via a data network so as to permit communication between the workstations. It is assumed that the data processing system shown in Figure **2** is of a type which will permit concurrent real time communication between the users. In Figure **2** the workstations are connected as part of a local area network under the control of a File Server (**FS)**. The network operates according to a conventional network protocol, such as the token ring protocol.

Figure **2** shows just one possible hardware configuration for a data processing network. Other configurations are possible. For example, the data processing system could be based upon a star network, or based upon a host processor connected to a plurality of dumb terminals, or based upon a plurality of remote processors connected by a communications network. The network could also be based upon the telephone network, an ISDN network or any other 'dial up' network. The workstations could be located within a single workspace, or within a local area (eg in a building), or could be remote from one another.

In the context of the present description, visual communication between a user and a workspace concerns the ability of that user to see screen objects displayed in that workspace on the associated display. In addition, full visual communication allows the user to manipulate those objects using tools and utilities in the workspace itself. A typical application might be that of a first user having full visual access to a second user's workspace. In this case, the two users would both be able to see, manipulate, and operate upon screen objects displayed in the workspace. This principle, 'what you see is what I see', or 'WYSIWIS', has been described in an article by Stefik et al, entitled 'Beyond the Chalkboard: Computer Support for Collaboration and Problem Solving in Meetings', Communications of the ACM 30, pages 32 to 47.

The present invention offers the ability to hear what the other collaborators are discussing in conjunction with seeing their gestures reflected via the display. This capability is provided by networking the workstations or intelligent workstations via a multiplexed voice and data link such as an ISDN link. Thus, a telephone **210** and attached speaker **200** facilitates voice communication between the collaborators over the ISDN link that also ties their computer data communication network together.

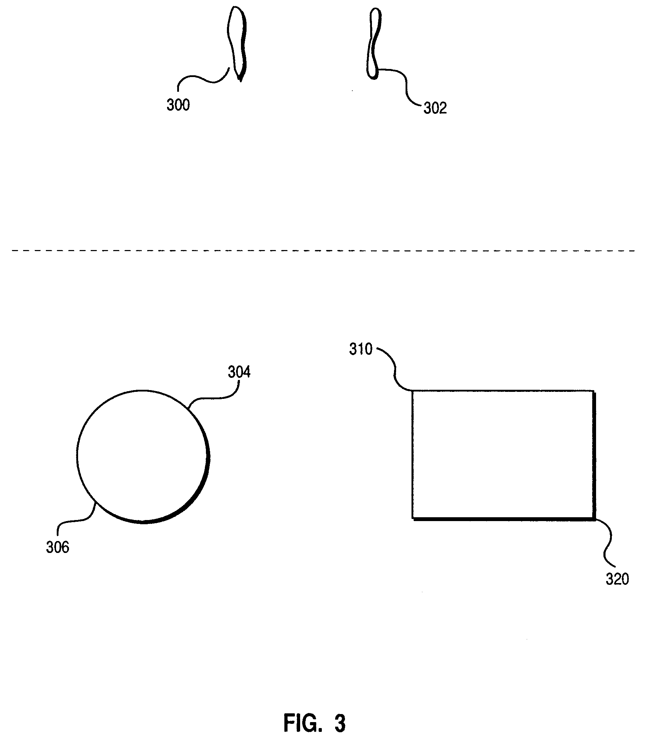

Each of the collaborators see the same information on their individual displays. As individuals point and touch their displays, a shape is displayed, and a corresponding shape is displayed at the same position on each of the other displays. For example, in Figure **3**, to indicate a range on a display, a user points to a first location **300** and a second location **302** with a thumb and a finger. This gesture would be accompanied by spoken phrases such as: this part of the assembly, from here to here.

The invention detects the particular points that have been selected by touch on the touch screen display and highlights them on the user's display using a shape determined by context and the number of touch points. Then, a corresponding shape is displayed on each of the collaborator's displays as the voice information is communicated via the speaker attached to the phone. In this way, all of the collaborators are cognizant of the shared information that is being discussed.

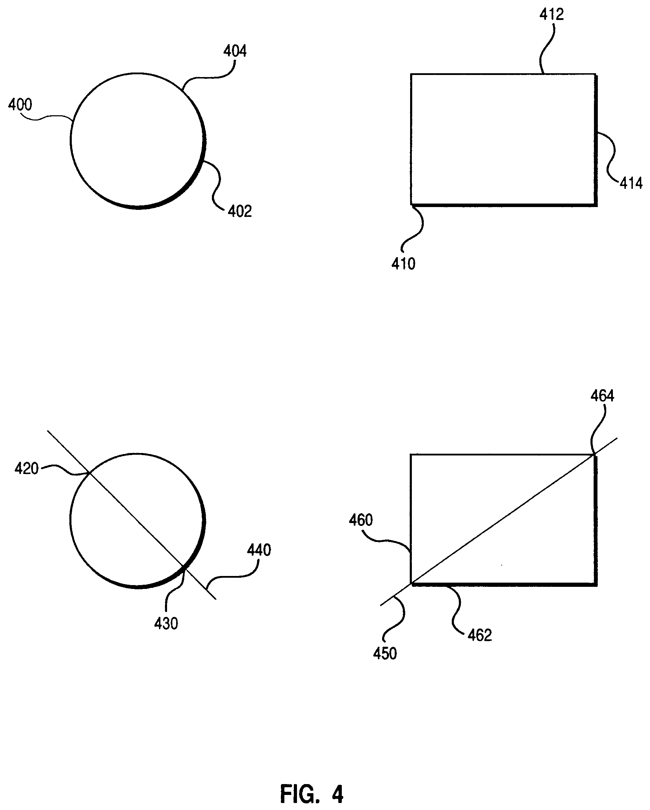

In an example of the present invention in use, a circle is defined by a pair of two touch contact points **304** and **306**. The circle is the unique circle that has the diameter with end points **304** and **306.** Similarly, a rectangle is defined as being the unique rectangle having a diagonal with end points **310** and **320**. An alternate approach is illustrated in Figure **4**. The circle is the unique circle which passes through each of the contact points **400**, **402** and **404** which are not collinear. A similar technique is illustrated with the rectangle defined by the three points **410, 412**, and **414**. The rectangle has a diagonal that passes through the highest contact point **410** and the corner determined by taking the Y coordinate of the lowest contact point **414** and the X coordinate of the highest contact point **412.**

Figure **4** illustrates examples of another use of gestures to communicate information with the use of contact points combined with diagonal lines to clearly delineate the meaning of the gestures. A circle and a square are used as demonstrative figures. The bisecting diagonals **440** and **464** are used to clearly convey the nature of the hand gestures to the other collaborators. The other points **420, 430, 464, 462** and **460** are as previously described.

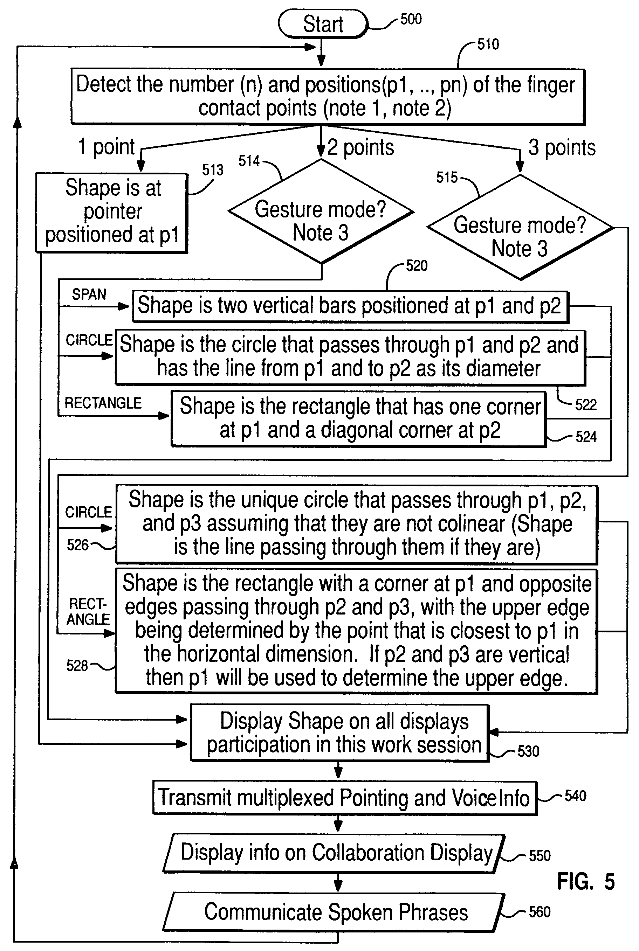

Figure **5** is a flow diagram of the detailed logic in accordance with the subject invention. Processing begins at **500** where gesture processing commences. At input block **510**, the number (n) and positions of the contact points (p1, ..., pn) are detected. If there are more than three contact points detected, then the additional contact points are discarded. The gesture mode is determined based on an integer value entered by a user to specify a particular mode. If no points are detected, and a user specified time has elapsed, then the previous gesture is cleared from the displays. If a single point is detected, then a pointer (arrow) shaped cursor is drawn at p1 as set forth in function block **513.**

Decision block **514** processes two points (p1 and p2) based on the gesture mode. If gesture mode is set to one, then the gesture mode is SPAN and two vertical bars are drawn on the display at p1 and p2 as shown in function block **520.** If gesture mode is set to two, then the gesture mode is CIRCLE and a circle is drawn around the diameter line with endpoints p1 and p2 as shown in function block **522**. If gesture mode is set to three, then the gesture mode is RECTANGLE and a rectangle is drawn that has one corner at p1 and a diagonal corner at p2 as shown in function block **524.**

Decision block **515** processes three points (p1, p2 and p3) based on the gesture mode. If gesture mode is set to one, then the gesture mode is CIRCLE and the unique circle is drawn which passes through p1, p2 and p3 if the points are not collinear as shown in function block **526**. If the points are collinear, then the shape is a line passing through the three points. If gesture mode is set to two, then the gesture mode is RECTANGLE and a rectangle with a corner at p1 and opposite edges passing through p2 and p3, with the upper edge being determined by the point that is closest to p1 in the horizontal direction is drawn as depicted in function block **528.**

The display shape is then drawn on all the displays participating in this work session as shown in function block **530, 540, 550,** and **560**. In **540** the multiplexed display information and voice information is transmitted to the participating work sessions. The display information includes the number and position of the contact points. Then, the information is displayed on each of the participating displays as shown in function block **550.** Finally, in function block **560**, the spoken information is communicated to all of the participating collaborators and control is passed to function block **510** to await the next gesture. The shapes used in the algorithm above are particularly useful for communicating regions of interest or discussion in geographically distributed cooperative work activities. Those skilled in the art recognize that this invention can be practiced in many other shapes and in environments involving many displays located great distances apart by, for example, compressing the audio and/or display information before transmitting it. Then, at the receiving end, the information can be decompressed before presenting it to the distant user.

## Claims

1. Apparatus for creating a figure on a touch screen display, comprising: means (39) for detecting touch contact points on the touch screen display (38); means (10) for calculating dimensions of the figure based on the location of the contact points on the touch screen display (38); and means (36) for displaying the figure at the location of the contact points on the touch screen display (38).

2. Apparatus as claimed in claim 1, including communication means for transmitting information indicative of the figure to a plurality of other locations.

3. Apparatus as claimed in claim 2, including means for displaying the figure at each of the other locations.

4. Apparatus as claimed in claim 1, including means for transmitting audio information to a plurality of other locations.

5. Apparatus as claimed in claim 1, wherein the figures are geometric figures representative of gestures.

6. Apparatus for communicating gestures and voice information in a co-operative activity, comprising: means for processing contacts with a display screen and displaying objects representative of gestures; communication means for transmitting information indicative of the objects and the voice information to a plurality of other locations; and means for displaying objects representative of gestures and the audio information at each of the other locations.

7. Apparatus as claimed in claim 6, including means for compressing the information indicative of the objects and voice information before transmission.

8. A method for creating a figure on a touch screen display, comprising: detecting contact points; calculating dimensions of a figure based on the location of the contact points on the touch screen display means; and displaying the figure at the location of the contact points on the touch screen display.

9. A method as claimed in claim 8, including transmitting information indicative of the figure to a plurality of other locations.

10. A method as claimed in claim 8, including displaying the figure at each of the other locations.

11. A method as claimed in claim 8, including transmitting audio information to a plurality of other locations.

12. A method as claimed in claim 8, wherein the figures are geometric figures representative of a gesture.
